# EUROPEAN PATENT SPECIFICATION

(11) **EP 3 219 576 B1**
(45) Date of publication and mention of the grant of the patent: **10.11.2021**
(21) Application number: 16160391.5
(22) Date of filing: 15.03.2016
(51) Int. Cl.: B61L 27/04, B60T 8/17, B60T 13/66, B60T 17/22

(54) **INTEGRATED TRAIN CONTROL AND DRIVER ADVISORY SYSTEM**
INTEGRIERTE ZUGSTEUERUNG UND FAHRERBERATUNGSSYSTEM
COMMANDE DE TRAIN INTEGRE ET SYSTEME CONSEILLANT LE CONDUCTEUR

(43) Date of publication of application: 20.09.2017
(73) Proprietor: KNORR-BREMSE Systeme für Schienenfahrzeuge GmbH, 80809 München (DE)
(72) Inventor: Mathe, Sandor, 1188 Budapest (HU); Madaras, Attila, 1024 Budapest (HU)

(56) References cited:
- WO-A1-2012/117068
- WO-A2-2014/037549

## Description

The present invention is in the field of driver advisory systems for trains. In particular, the present invention relates to driver advisory systems that receive data from sources outside of the train.

Providing driver advisory systems in trains is highly desirable. Driver advisory systems can be of great help to the train driver in safely and efficiently operating the train. For example, a driver advisory system may provide the driver with the current velocity limit, a velocity recommendation for achieving an energy-efficient trip along a particular trip segment, etc. While driver advisory systems are generally desirable to have, their implementation is complex and involves a variety of components. For example, a common driver advisory system has a processor and an associated memory for determining appropriate driving recommendations as well as a display and/or loudspeaker for outputting the driving recommendations. In addition, common driver advisory systems are equipped with means for determining an actual position of the train, such as a GPS receiver, and an external data interface for receiving data about the trip segment to be driven, such as schedule data, velocity limits along the trip segment, etc. Such external data interface may be used to communicate with a control center or similar and may operate in a wireless manner. This high level of complexity often prevents driver advisory systems from being installed in trains.

WO 2014/037549 A2 discloses a method for calculating a driving recommendation by means of an assistance system incorporated in a rail vehicle, having a calculation unit and a data memory, in which timetable and route information about the route to be traveled, physical properties of the rail vehicle and, if appropriate, wagons attached to the latter are stored, the method comprising the following method steps: detecting the current position of the rail vehicle, detecting the current speed of the rail vehicle, detecting instantaneous state parameters of the braking components of the rail vehicle, comparing the state parameters of braking components with intended ranges of the state parameters of braking components that are stored in the data memory, calculating the currently available braking force of the braking components on the basis of the comparison of the state parameters of the braking components, updating the driving recommendation during the journey while taking into account the current position and speed of the rail vehicle and the currently available braking force of the braking components obtained from the comparison of the state parameters of the braking components.

WO 2012/117068 A1 discloses a method for calculating a recommended speed using a driver assistance system which is built into a rail vehicle, and which comprises a control unit and a data memory in which information about the timetable and routes of the journey which are to be driven, physical properties of the rail vehicle are stored. Said method consists of the following steps: the position of the rail vehicle and the actual time is detected using a receiver of a satellite navigation system, said receiver being installed on or in the rail vehicle; the actual speed of the rail vehicle is determined from the data captured by the satellite navigation system; the actual speed of the rail vehicle is compared to a previously calculated desired speed for the currently driven path section, whereby the desired speed is calculated for the individual path sections before the journey begins and is stored in the data memory as a desired speed profile; the desired speed profile is updated during the journey taking into account the actual position and speed of the rail vehicle and the data stored in the data memory and the updated recommended speed is displayed.

Accordingly, it would be beneficial to implement driver advisory systems in trains in a simplified manner. Also, it would be beneficial to provide a system that allows for a simplified implementation of a driver advisory system in a train.

Exemplary embodiments of the invention include an integrated train control and driver advisory system in accordance with claim 1 and a method of creating an integrated train control and driver advisory system in accordance with claim 13. Further exemplary embodiments are given in the dependent claims.

Exemplary embodiments of the invention include an integrated train control and driver advisory system, comprising an on-board control communication network of a train, a train control unit, coupled to the control communication network and comprising an interface for the train driver for controlling an operation of the train, at least one component control unit for controlling an operation of at least one train component, the at least one component control unit being coupled to the control communication network and the train control unit being configured to exchange control data with the at least one component control unit via the control communication network, a driver advisory module, coupled to the control communication network and configured to provide driving recommendations during the operation of the train, and an external data interface, coupled to the train control communication network and forming a gateway to an external data communication network, with the driver advisory module being configured to receive data from the external data communication network via the external data interface.

Exemplary embodiments of the invention allow for an integrated system architecture that allows for a combined using of the same control communication network by the train control system and the driver advisory system. In this way, when viewing the train control system and the driver advisory system jointly as having a given scope of functionality, the hardware requirements can be greatly reduced as compared to prior approaches, where the train control system and the driver advisory system were separate systems. By coupling both the train control unit and the driver advisory module to the same control communication network of the train, various resources, such as the external data interface or a navigation satellite system receiver or outputting means, such as a display, can be shared among the train control system and the driver advisory system. Also, by using the same control communication network on-board the train, the number and extent of communication links on-board the train, such as communication cables, can be reduced. By using various components and communication links for both the train control system and the driver advisory system, the overall system complexity, weight and cost can be reduced. Train control functionality and driver advisory functionality can be embedded into a single, integrated system. Moreover, the provision of an integrated train control and driver advisory system allows for an easier retrofitting of existing train control systems with driver advisory functionality, as will be explained in detail below.

The control communication network is a distributed communication network having multiple access nodes. In particular, the control communication network may be distributed over at least a portion of the train, for example it may be distributed over a locomotive of the train. In this way, various components that are distributed over the portion of the train in question can access the control communication network via the multiple access nodes. The control communication network may be a decentralized communication network, with the connected entities being allowed to initiate communication out of their own motion. The control communication network may be operated in accordance with a suitable communication protocol. The communication protocol may control access to the control communication network in a way that the data transmission sources are shared in an appropriate manner between the connected entities.

The train control unit, the at least one component control unit, the driver advisory module, and the external data interface are coupled to the control communication network. In this capacity, these and potentially further elements coupled to the control communication network may be jointly referred to as the entities connected to the control communication network. The coupling may be implemented via access nodes that provide an interface between the control communication network and the entities described above. The access nodes may be addressable nodes, such that the entities can communicate with each other over the control communication network in a targeted manner. Each of the described entities may have its own access node. However, it is also possible that any given subset of said entities shares a common access node.

The train control unit is a high level control unit, relating to the driving behaviour of the train as a whole. In particular, the train control unit has an interface for the train driver, through which the train driver can control the high level behaviour of the train. For example, the train driver can set a level of acceleration / braking through the interface of the train control unit. In this way, the train control unit is the single point of contact for the train driver, with the control of the individual components, such as brakes and engines, being decoupled therefrom. As compared to the train control unit, the one or more component control units are configured to control individual train components, such as brakes and engines. For example, a component control unit may be a brake control unit or an engine control unit, adapted to control a brake or an engine of the train, respectively. The component control units receive control commands from the train control unit and control the operation of the associated train components. With the distributed control communication network being interposed between the train control unit and the one or more component control units, the train control unit and the one or more component control units can conveniently exchange control data and, potentially, status data over the control communication network despite their spatial separation within the train.

The driver advisory module is configured to receive data from the external data communication network via the external data interface. With the external data interface being coupled to the control communication network, both the driver advisory module as well as the train control unit are in a position to receive data from and, potentially, transmit data over the external data interface. In this way, a single external data interface may be accessed and jointly used by the train control unit and the driver advisory module. The requirement of prior approaches to have separate external data interfaces for the train control unit and the driver advisory module can be eliminated. It is possible that the driver advisory module is configured to receive data from the external data communication network via the external data interface and the control communication network. However, it is also possible that the driver advisory module is integrated into the external data interface and that the data is received by the driver advisory module directly from the external data interface without being transferred through the control communication network. In that case, the driving recommendations are transferred through the control communication network to an output device. Accordingly, at least one of data from the external communication network, intended for the driver advisory module, and driving recommendations, provided by the driver advisory module, are transferred through the control communication network. In other words, the control communication network, through which the train control unit and the one or more component control units communicate, is used by the driver advisory module for at least one of input data and output data. It is also possible that the driver advisory module is coupled to the control communication network in such a manner that it receives input data through the control communication network and transmits output data, such as driving recommendations, through the control communication network.

The input data received by the driver advisory module may comprise at least one of schedule data, trip data, and train data, as will be described in greater detail below.

The integrated train control and driver advisory system architecture may allow the driver advisory module to communicate with other entities over the control communication network without interaction by the train control unit. In other words, the driver advisory module may be independent from the train control unit for interacting with the other entities coupled to the control communication network. In this way, the driver advisory module may be able to communicate with and use the functionality of other entities, such as the external data interface, on its own, despite the fact that the main purpose of these other entites may be the support of the train control unit. The driver advisory module may be an independent participant of the control communication network.

The driver advisory module may be configured to listen in on data communicated over the control communication network that is directed to another entity. In other words, the driver advisory module may be configured to listen in on data which is communicated over the control communication network and for which the driver advisory module is not the intended recipient. In particular, the driver advisory module may be configured to listen in on data communicated towards the train control unit. For example, it is possible that a train velocity detection unit, such as a sensor measuring the rotation speed of a train axle or a sensor measuring the rotation speed of a train engine, is configured to communicate data indicative of the train velocity to the train contol unit. By listening in on this communication, the driver advisory module may infere momentary information about the train velocity without having to cause additional traffic on the control communication network. In another example, it is also possible that the driver advisory module deduces the train position from train position data transmitted by a GPS receiver to the train control unit. In this way, not only the resources of the control communication network, but also the data transmitted over the control communication network are used efficiently for multiple purposes.

The driver advisory module is configured to provide driving recommendations to the driver of the train. In particular, the driver advisory module may generate and provide driving recommendations on the basis of one or more of the present position of the train, the present velocity of the train, schedule data for a trip segment, velocity limits along the trip segment, an altitude profile along the trip segment, energy consumption data, etc. For example, the driver advisory module may be configured to provide velocity recommendations and/or acceleration / braking recommendations to the driver of the train on the basis of the schedule data for the trip segment and the velocity limits along the trip segment. It is also possible that the driver advisory module is configured to provide velocity recommendations and/or acceleration / braking recommendations in accordance with an energy-optimized velocity profile along the trip segment. The energy-optimized velocity profile may be the velocity profile along the trip segment that minimizes energy consumption, constrained by the velocity limits along the trip segment and maximum allowable deviations from the train schedule. The energy-optimized velocity profile may be determined by additionally taking various factors into account, such as the altitude profile along the trip segment and the dynamic behavior characteristics of the train. The dynamic behavior characteristics may be the energy consumption for a given acceleration, the energy recuperation for a given braking, in case electrodynamic brakes are used, the maximum acceleration and braking capacities of the train, etc.

According to a further embodiment, the integrated train control and driver advisory system comprises a navigation satellite system receiver, coupled to the control communication network and being configured to provide train position data to the driver advisory module via the control communication network. In this way, the driver advisory module can make use of the control communication network for receiving train position data. The need of prior driver advisory systems to be equipped with a separate navigation satellite system receiver is thus eliminated. The output of the navigation satellite system receiver can be used by both the train control unit and the driver advisory module. Also, the same means of communication, namely the control communication network, may be used for the distribution of the train position data to the train control unit and the driver advisory module. The navigation satellite system may be the Global Positioning System (GPS). The navigation satellite system receiver may be a GPS receiver.

According to the invention the control communication network is a vehicle bus. A vehicle bus is an efficient means of implementing the control communication network. Vehicle buses may have various favorable operating characteristics, such as assurance of message delivery, non-conflicting messages, minimum time of delivery, redundant routing, etc. Also, vehicle buses are readily available components that allow for an implementation of the control communication network with fairly low complexity. The vehicle bus may have a plurality of access points, also referred to as access nodes, to which the train control unit, the at least one component control unit, the driver advisory module, and the external data interface may be coupled. These access nodes may have equal bus access rights, such that the communication over the vehicle bus may be carried out in a decentralized manner. The driver advisory module may thus communicate with the other connected entities out of its own motion. The vehicle bus may be configured to operate according to a suitable communication protocol. In particular, the vehicle bus may be a Controller Area Network (CAN) bus or a Local Interconnect Network (LIN) bus.

According to a further embodiment, the external data interface is a wireless data interface. In this way, both the train control unit and the driver advisory module may communicate with a wayside external data communication network in a convenient manner. When the train is located in a train station, no wired connection between the control communication network and external data sources has to be established. The control communication network and its associated entities can communicate with external data sources, such as a train operator control center, in a wireless manner. Also, the control communication network and its associated entities may be able to communication with the external data communication network during operation of the train, i.e. when the train is in motion in between train stations. The train control unit and the driver advisory module can thus be provided with current information, such as current weather information, schedule changes, track problems, etc., in a real-time manner. The wireless data interface may be configured to operate in accordance with a mobile phone standard. For example, the wireless data interface may be a GSM, UMTS or LTE interface.

According to a further embodiment, the driver advisory module is integrated into a particular one of the at least one component control unit, with the driver advisory module being configured to receive data from the external data communication network via the external data interface and the control communication network. For example, the driver advisory module may be integrated into a brake control unit or an engine control unit. By integrating the driver advisory module into a particular component control unit, no extra space is required for the driver advisory module. Also, the driver advisory module may be a software program. In that case, this software program may be installed on the particular component control unit and the computing power of the particular component control unit may be employed for running the driver advisory module software. In this way, the driver advisory module may be conveniently installed into an existing hardware component and no extra hardware is to be provided. The driver advisory module and the particular component control unit may share a common access node to the control communication network. It is also possible that the driver advisory module is a hardware module, in particular a processor-based hardware module, and is installed into the particular component control unit. For example, the driver advisory module may be integrated into the particular component control unit as an additional CPU card in a rack system. The driver advisory module and the particular component control unit may then share a common access node to the control communication network or may have separate access nodes. When integrated into a particular component control unit, the driver advisory module may be configured to receive train position data, such as GPS data, from the navigation satellite system receiver over the control communication network.

According to a further embodiment, the integrated train control and driver advisory system further comprises an energy metering system coupled to the control communication network, wherein the driver advisory module is integrated into the energy metering system, with the driver advisory module being configured to receive data from the external data communication network via the external data interface and the control communication network. The effects regarding space efficiency and usage of readily available computing power, as described above with respect to the integration of the driver advisory module into a component control unit, apply to the integration into the energy metering system in an analogous manner. Also, the implementation via software or hardware and the coupling to the control communication network via one or two access nodes, as described above with respect to the integration of the driver advisory module into a component control unit, are analogously possible in the framework of the energy metering system. Further, the driver advisory module may be configured to receive train position data, such as GPS data, from the navigation satellite system receiver over the control communication network.

According to a further embodiment, the driver advisory module is integrated into the external data interface. In particular, the external data interface may comprise a data receiver and a communication gateway, with the driver advisory module being integrated into the communication gateway. The effects regarding space efficiency and usage of readily available computing power, as described above with respect to the integration of the driver advisory module into a component control unit, apply to the integration into the external data interface in an analogous manner. Also, the implementation via software or hardware and the coupling to the control communication network via one or two access nodes, as described above with respect to the integration of the driver advisory module into a component control unit, are analogously possible in the framework of the external data interface. Further, the data from the external data communication network can be immediately provided to the driver advisory module. No communication resources on the control communication network have to be spent on the data exchange between the driver advisory module and the external data communication network. Further, the driver advisory module may be configured to receive train position data, such as GPS data, from the navigation satellite system receiver over the control communication network.

According to a further embodiment, the driver advisory module is comprised in a stand-alone driver advisory unit, with the driver advisory module being configured to receive data from the external data communication network via the external data interface and the control communication network. As a stand-alone component, the driver advisory unit may have its own access node to the control communication network. The driver advisory unit may be configured to solely generate driver recommendations from suitable input data. It may be free of other control functions or communication functions. The stand-alone driver advisory unit may be integrated into the train control and driver advisory system in a very conventient manner, because no immediate interaction with the other connected entities has to be configured. It solely is to be ensured that the driver advisory unit communicates over the control communication network in accordance with the implemented communication protocol. The driver advisory unit may have a suitable output device, such as a display or a loudspeaker, for outputting the driving recommendations to the driver of the train. In this way, the output of the driving recommendations may be taken care of by the driver advisory unit, and the driving recommendations are not transmitted to a suitable output device via the control communication network. However, it is also possible that the driving recommendations are transmitted via the control communication network for being output to the driver by another entity coupled to the control communication network. Further, the driver advisory module, comprised in the stand-alone driver advisory unit, may be configured to receive train position data, such as GPS data, from the navigation satellite system receiver over the control communication network.

According to a further embodiment, the driver advisory module is configured to transmit the driving recommendations to an output device via the control communication network. The output device may be a display or a loudspeaker or a combined display and loudspeaker system. The output device may be a stand-alone output device, coupled to the control communication network and having its own access node. It is also possible that the output device is integrated into the train control unit, i.e. that the output functionality of the train control unit is additionally used for outputting the driving recommendations.

According to a further embodiment, the driver advisory module is integrated into the train control unit, with the driver advisory module being configured to receive data from the external data communication network via the external data interface and the control communication network. The effects regarding space efficiency and usage of readily available computing power, as described above with respect to the integration of the driver advisory module into a component control unit, apply to the integration into the train control unit in an analogous manner. Also, the implementation via software or hardware and the coupling to the control communication network via one or two access nodes, as described above with respect to the integration of the driver advisory module into a component control unit, are analogously possible in the framework of integration into the train control unit. Further, the driver advisory module may be configured to receive train position data, such as GPS data, from the navigation satellite system receiver over the control communication network.

According to a further embodiment, the driver advisory module is a software module or a hardware module or a processor-based hardware module with at least one software program installed thereon. In other words, the driver advisory module may be a pure software module or a pure hardware module, such as an application specific integrated circuit, or a processor-based hardware module that has a software program for generating the driving recommendations.

Exemplary embodiments of the invention further include a method of creating an integrated train control and driver advisory system, comprising the steps of providing a driver advisory module configured to provide driving recommendations during the operation of a train; coupling the driver advisory module to an on-board control communication network of the train, to which a train control unit, at least one component control unit, and an external data interface are coupled; and establishing data communication over the control communication network, with the driver advisory module receiving input data over the control communication network and/or transmitting the driving recommendations over the control communication network. The additional features, modifications, and effects, described above with respect to the integrated train control and driver advisory system, apply to the method of creating an integrated train control and driver advisory system in an analogous manner. Method steps, corresponding to the apparatus features described above, are explicitly disclosed herewith.

By providing the driver advisory module and coupling the driver advisory module to the control communication network of the train, the communication functionality of the train communication network is used for both control purposes and driver advisory purposes. The control system and the driver advisory system of the train can be implemented in a very space-efficient and resource-efficient manner. The control system and the driver advisory system may share the functionality of various entities coupled to the control communication network. The driver advisory module may use the control communication network for receiving input data or for transmitting driving recommendations to a suitable output device of for both receiving input data and transmitting driving recommendations. The term establishing data communication over the control communication network refers to the establishing of data communication functionality, i.e. it refers to the process of setting up the control communication network during the assembly / manufacture, with the actual data communication taking place at a later point in time during operation of the train.

According to a further embodiment, the control communication network is a pre-installed control communication network and the driver advisory module is retrofitted into the train. In other words, the driver advisory module may be added to an existing control system of a train, with the control communication network, which was previously only used in the context of train control, being altered into a dual-purpose communication network. In this way, existing control systems can be conveniently extended into integrated train control and driver advisory systems. Such retrofitting keeps the number of additional components / modules to be integrated into the system low, can be performed in short amounts of time, and the associated assembly / maintenance efforts are comparably low.

According to a further embodiment, the external data interface is configured to receive input data for the driver advisory module from an external data communication network and to transmit the input data for the driver advisory module to the driver advisory module via the control communication network. It is additionally / alternatively possible that the integrated train control and driver advisory system comprises a navigation satellite system receiver, which is configured to determine train position data and to transmit the train position data to the driver advisory module via the control communication network. In this way, the driver advisory module may be provided with data suitable for determining the driving recommendations. The input data from the external data communication network may be schedule data, trip data, data about the dynamic behavior characteristics of the train, etc., as described above.

Further exemplary embodiments of the invention are described in detail below with reference to the accompanying figures.
- Fig. 1: shows an integrated train control and driver advisory system in accordance with an exemplary embodiment of the invention, installed in an exemplary train.
- Fig. 2: shows integrated train control and driver advisory systems in accordance with further exemplary embodiments of the invention.
- Fig. 3: shows an integrated train control and driver advisory system in accordance with yet another exemplary embodiment of the invention.

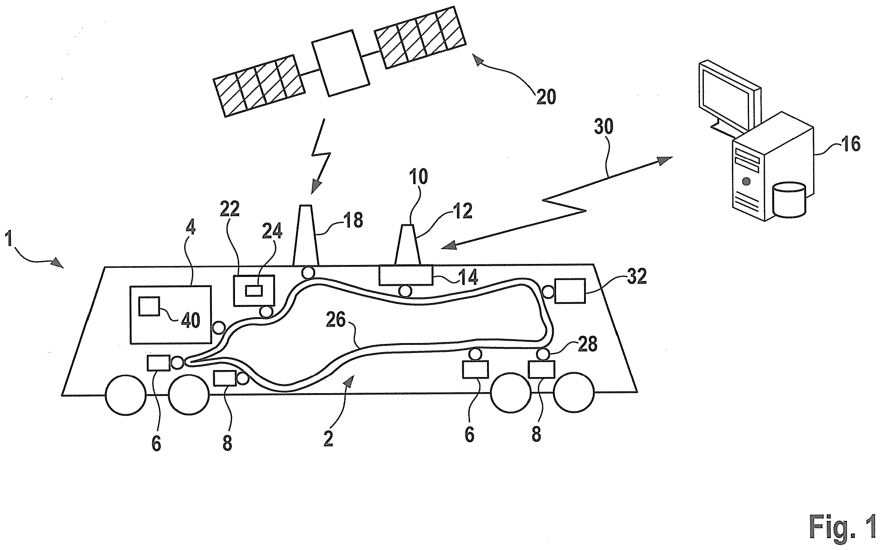

**Fig. 1** shows an integrated train control and driver advisory system 2 in accordance with an exemplary embodiment of the invention. The integrated train control and driver advisory system 2 is installed in a train 1, i.e. it is an on-board integrated train control and driver advisory system 2. For ease of illustration, the train 1 is shown to consist of a single locomotive, which is depicted in Fig. 1. However, the train may have any number of locomotives and wagons, such as passenger wagons and freight wagons. The integrated train control and driver advisory system 2 may extend over a single locomotive, as shown in Fig. 1, or may extend over multiple locomotives and/or wagons of the train.

The integrated train control and driver advisory system 2 has a train control unit 4. The train control unit 4 has input means that allow the train driver to control the train. The train control unit 4 also has output means that allow feedback to the train driver. In the exemplary embodiment of Fig. 1, the train control unit 4 has a display 40 that allows the output of feedback to the train driver. For example, the momentary velocity of the train 1 may be output to the train driver via the display 40.

The integrated train control and driver advisory system 2 has two brake control units 6. The brake control units 6 are each associated with and control a respective set of brakes. The integrated train control and driver advisory system 2 further has two engine control units 8. The engine control units 8 are each associated with and control a respective engine, such as an electric motor that is supplied with electric energy from the power supply line. In operation, data exchange between the train control unit 4 and the brake control units 6 / engine control units 8 takes place. The train control unit 4 issues high level control commands, according to which the brake control units 6 and the engine control units 8 control their associated brakes / engines. The brake control units 6 and the engine control units 8 are exemplary component control units.

The integrated train control and driver advisory system 2 further has an external data interface 10. The external data interface 10 comprises a data receiver 12 and a communication gateway 14. The external data interface 10 is configured to exchange data over an external data communication network 30. In particular, the external data interface 10 is configured to exchange data with an external computer system 16 over a wireless data communication network, such as over a GSM or UMTS or LTE mobile phone network. The external computer system 16 may be a train operator control center, through which a plurality of trains is concurrently controlled.

The integrated train control and driver advisory system 2 has a navigation satellite system receiver 18. In the exemplary embodiment of Fig. 1, the navigation satellite system receiver 18 is a GPS receiver. In operation, the GPS receiver 18 receives data from a plurality of navigation satellites 20, on the basis of which the momentary position of the train 1 can be determined.

The integrated train control and driver advisory system 2 further has a driver advisory unit 22. The driver advisory unit 22 has a driver advisory module 24, which is configured to determine driving recommendations on the basis of various input data, as will be explained below. In the exemplary embodiment of Fig. 1, the driver advisory module 24 is a software program that is in operation run on the driver advisory unit 22, which may be a processor-based computer. It is also possible that the driver advisory module 24 is a processor-based hardware module, which has suitable software installed thereon. In that case, the driver advisory unit 22 only provides the framework for the driver advisory module 24, such as by providing suitable data interfaces for communicating data. In either case, the driver advisory unit 22 is a stand-alone entity that is capable of determining driving recommendations from suitable input data, without relying on additional system components.

The integrated train control and driver advisory system 2 has an energy metering system 32. The energy metering system may be coupled to the power supply circuitry of the train 1 and may sense the power supplied to and consumed by the train 1.

The integrated train control and driver advisory system 2 further has a control communication network 26. In the exemplary embodiment of Fig. 1, the control communication network 26 is a CAN bus. It is also possible that the control communication network 26 is a LIN bus or another kind of vehicle bus or any other kind of suitable communication network.

The train control unit 4, the brake control units 6, the engine control units 8, the external data interface 10, the navigation satellite system receiver 18, the energy metering system 32, and the driver advisory unit 22 are coupled to the CAN bus 26 via access nodes 28. In this way, the train control unit 4, the brake control units 6, the engine control units 8, the external data interface 10, the navigation satellite system receiver 18, the energy metering system 32, and the driver advisory unit 22 are in a position to exchange data over the CAN bus 26 and are thus referred to as entities coupled to the control communication network 26. The CAN bus 26 extends over the train 1, i.e. over the single locomotive shown, and physically passes by all of the entities described above. In this way, data communication between the connected entities is facilitated.

The operation of the integrated train control and driver advisory system 2 is now described for the operation of the train 1 along a given trip segment, such as along a trip segment between two train stations. The train driver interacts with the train control unit 4 for controlling the operation of the train. On the basis of the train driver's commands, the train control unit 4 issues respective commands to the brake control units 6 and the engine control units 8 and transmits messages cotaining these commands over the CAN bus 26. Upon receiving these messages, the brake control units 6 and the engine control units 8 control the associated brakes / engines accordingly, such that the train as a whole reacts to the train driver commands in an appropriate manner.

Before starting the journey along the trip segment, schedule data, trip data and train data is transmitted from the train operator control center 16 to the external data interface 10. The schedule data may contain the scheduled time for the trip segment and maximum allowable deviations therefrom. The trip data may contain information about the length of the trip segment, the altitude profile along the trip segment, and the velocity limits along the trip segment. The train data may contain information about the dynamic behavior characteristics of the train, such as maximum acceleration / braking capabilities, energy consumption as a function of train acceleration, energy recuperation as a function of tain braking, etc. The train data may be transmitted as high level values. It is also possible that basic physical properties of the train, such as weight, number of wagons, kinds of engines, kinds of brakes, etc. are transmitted, from which the dynamic behavior of the train can be calculated. The schedule data, trip data and train data are received by the external data interface 10 and are transmitted to the driver advisory module 24 via the control communication network 26. The driver advisory module 24 calculates an energy-optimized velocity profile along the trip segment on the basis of the schedule data, the trip data and the train data in accordance with per se known procedures.

During the journey of the train 1 along the trip segment, GPS data about the train position are transmitted from the GPS receiver 18 to the driver advisory module 24. On the basis of the momentary position of the train 1 and the calculated energy-optimized velocity profile, the driver advisory module determines driving recommendations. The driving recommendations may be specific velocity recommendations or may be acceleration / braking recommendations or a combination thereof. The driver advisory module 24 transmits the driving recommendations to the train control unit 4 over the CAN bus 26. The train control unit 4 outputs these driving recommendations to the train driver via the display 40. It is also possible that the driver advisory unit 22 has its own display and that the driving recommendations are output to the train driver via the display of the driver advisory unit 22.

The train control unit 4 may also receive the GPS data from the GPS receiver 18 during operation, e.g. for determining the momentary velocity of the train 1. Also, the train control unit 4 may receive messages from the train operator control center 16 via the external data communication network 30 and the CAN bus 26. For example, the train operator control center 16 may send messages to the train control unit 4 about obstacles along the track, about the momentary state of the signal boxes along the way, about schedule changes, etc. These messages are also routed via the external data communication network 30, the external data interface 10, and the control communication network 26.

In this way, the driver advisory module 24 and the train control unit 4 share the control communication network 26 for communication purposes. Also, the driver advisory module 24 and the train control unit 4 may both rely on receiving data from the GPS receiver 18 and the external data communication interface 10. An integrated train control and driver advisory system with low hardware requirements and joint usage of communication resources is established.

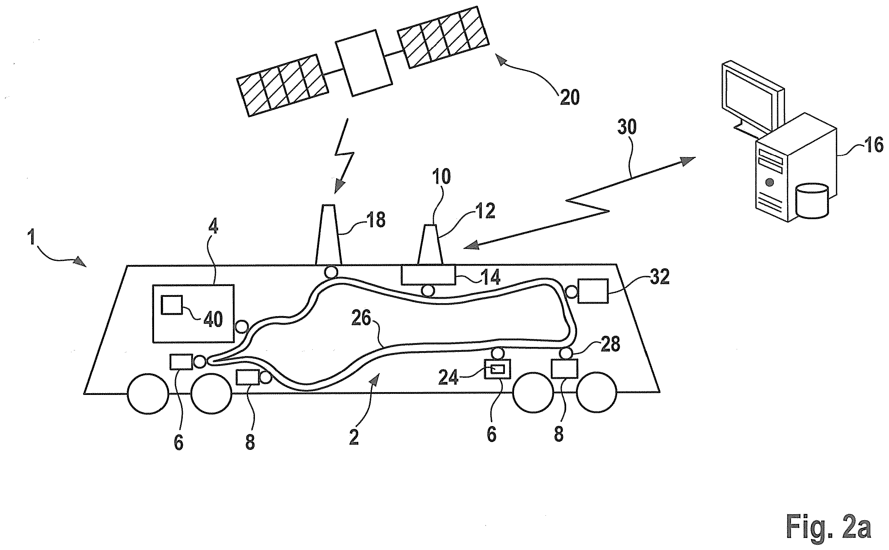

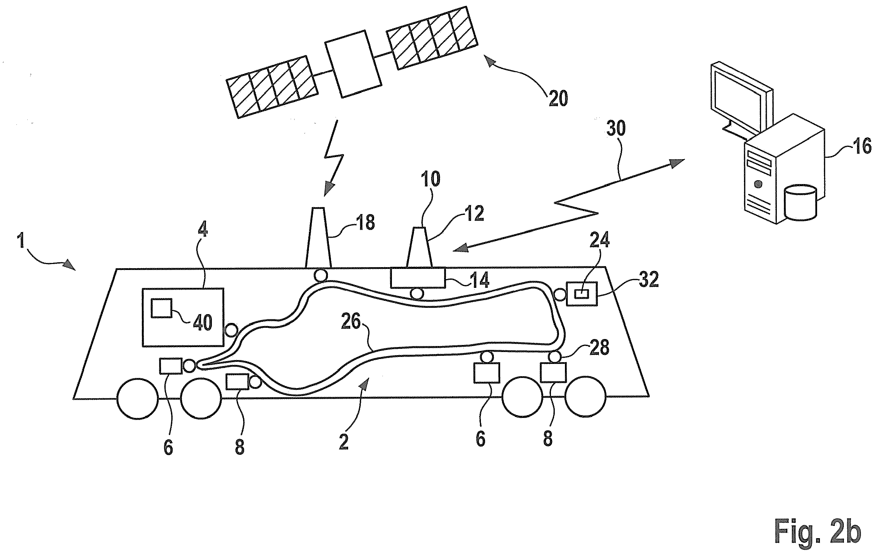

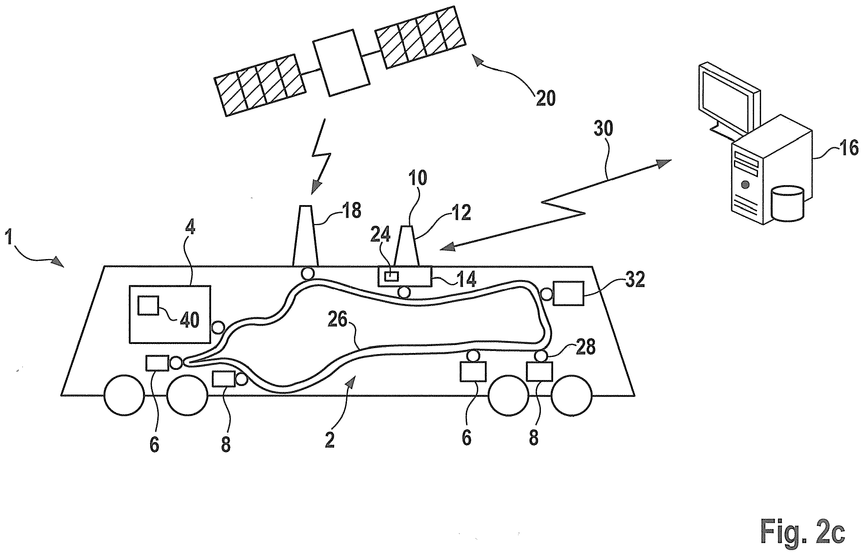

**Fig. 2** shows various integrated train control and driver advisory systems 2 in accordance with further exemplary embodiments of the invention. The integrated train control and driver advisory systems 2 are similar to the integrated train control and driver advisory system 2 of Fig. 1 and have many identical elements. Reference is made to the description of these elements in the context of Fig. 1.

The integrated train control and driver advisory systems 2 of Fig. 2 differ from the integrated train control and driver advisory system 2 of Fig. 1 in that no stand-alone driver advisory unit is provided. Rather, the driver advisory module 24 is integrated into other entities connected to the control communication network. In the exemplary embodiment of Fig. 2a, the driver advisory module 24 is integrated into one of the brake control units 6. In the exemplary embodiment of Fig. 2b, the driver advisory module 24 is integrated into the energy metering system 32. In the exemplary embodiment of Fig. 2c, the driver advisory module 24 is integrated into the external data interface 10, in particular into the data gateway 14 of the external data interface 10.

In the integrated train control and driver advisory systems 2 of Figs. 2a, 2b and 2c, the driver advisory module 24 is integrated into an entity of the integrated train control and driver advisory system 2 that primarily has other functions than providing driving recommendations. In each case, the respective entity comprising the driver advisory module 24 is a dual-purpose entity, providing the driving recommendations on the one hand and performing another function on the other hand. The existing computing power of the brake control unit 6, the energy metering system 32 or the external data interface 10 may additionally be used for providing the driver advisory system functionality, e.g. by running a software program embodying the driver advisory module 24. It is also possible that a CPU card embodying the driver advisory module 24 is integrated into the brake control unit 6, the energy metering system 32 or the external data interface 10, e.g. when embodied as a rack system.

In the exemplary embodiments of Fig. 2, the driver advisory module 24 shares a common access node with the brake control unit 6, the energy metering system 32 or the external data interface 10, respectively. However, it is also possible that two separate access nodes are provided. In this way, the driver advisory module 24 may be individually addressable over the control communication network 26.

In each of the embodiments of Fig. 2, the driver advisory module transmits the driving recommendations over the control communication network to the train control unit 4 for being output via the display 40.

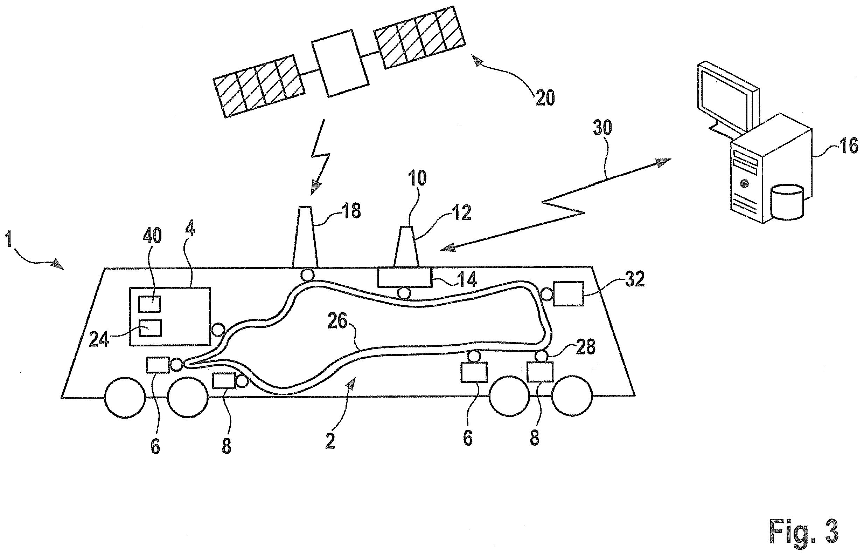

**Fig. 3** shows an integrated train control and driver advisory system 2 in accordance with yet another exemplary embodiment of the invention. The integrated train control and driver advisory system 2 is similar to the integrated train control and driver advisory system 2 of Fig. 1 and has many identical elements. Reference is made to the description of these elements in the context of Fig. 1.

In the exemplary embodiment of Fig. 3, the driver advisory module 24 is integrated into the train control unit 4. While the driver advisory module 24 receives its input data over the control communication network 26, the driving recommendations are immediately output via the display 40 of the train control unit 4, without being transmitted via the control communication network 26.

### LIST OF REFERENCE NUMERALS

- 1: Train
- 2: Integrated train control and driver advisory system
- 4: Train control unit
- 6: Brake control unit
- 8: Engine control unit
- 10: External data interface
- 12: Data receiver
- 14: Communication gateway
- 16: External computer system
- 18: Navigation satellite system receiver
- 20: Navigation satellite
- 22: Driver advisory unit
- 24: Driver advisory module
- 26: Control communication network
- 28: Access node
- 30: External data communication network
- 32: Energy metering system

## Claims

1. Integrated train control and driver advisory system (2), comprising:
an on-board control communication network (26) of a train (1),
a train control unit (4), coupled to the control communication network and comprising an interface for the train driver for controlling an operation of the train,
at least one component control unit (6, 8), such as a brake control unit, for controlling an operation of at least one train component, such as a brake, the at least one component control unit being coupled to the control communication network and the train control unit being configured to exchange control data with the at least one component control unit via the control communication network,
a driver advisory module (24), coupled to the control communication network and configured to provide driving recommendations during the operation of the train, and
an external data interface (10), coupled to the train control communication network and forming a gateway to an external data communication network (30), with the driver advisory module being configured to receive data from the external data communication network via the external data interface,
wherein the control communication network (26) is a vehicle bus.

2. Integrated train control and driver advisory system (2) according to claim 1, further comprising:
a navigation satellite system receiver (18), coupled to the control communication network (26) and being configured to provide train position data to the driver advisory module (24) via the control communication network.

3. Integrated train control and driver advisory system (2) according to claim 1 or 2, wherein the control communication network (26) is a CAN bus or a LIN bus.

4. Integrated train control and driver advisory system (2) according to any of the preceding claims, wherein the external data interface (10) is a wireless data interface, in particular a wireless data interface in accordance with a mobile phone standard, such as GSM, UMTS and LTE.

5. Integrated train control and driver advisory system (2) according to any of the preceding claims, wherein the driver advisory module (24) is integrated into a particular one of the at least one component control unit (6, 8), with the driver advisory module being configured to receive data from the external data communication network (30) via the external data interface (10) and the control communication network (26).

6. Integrated train control and driver advisory system (2) according to claim 5, wherein the driver advisory module (24) is integrated into a brake control unit (6) or an engine control unit (8).

7. Integrated train control and driver advisory system (2) according to any of claims 1 to 4, further comprising an energy metering system (32) coupled to the control communication network (26), wherein the driver advisory module (24) is integrated into the energy metering system, with the driver advisory module being configured to receive data from the external data communication network (30) via the external data interface (10) and the control communication network.

8. Integrated train control and driver advisory system (2) according to any of claims 1 to 4, wherein the driver advisory module (24) is integrated into the external data interface (10).

9. Integrated train control and driver advisory system (2) according to any of claims 1 to 4, wherein the driver advisory module (24) is comprised in a stand-alone driver advisory unit (22), with the driver advisory module being configured to receive data from the external data communication network (30) via the external data interface (10) and the control communication network (26).

10. Integrated train control and driver advisory system (2) according to any of claims 5 to 9, wherein the driver advisory module (24) is configured to transmit the driving recommendations to an output device via the control communication network (26).

11. Integrated train control and driver advisory system (2) according to any of claims 1 to 4, wherein the driver advisory module (24) is integrated into the train control unit (4), with the driver advisory module being configured to receive data from the external data communication network (30) via the external data interface (10) and the control communication network (26).

12. Integrated train control and driver advisory system (2) according to any of the preceding claims, wherein the driver advisory module (24) is a software module or a hardware module or a processor-based hardware module with at least one software program installed thereon.

13. Method of creating an integrated train control and driver advisory system (2), comprising the steps of:
providing a driver advisory module (24) configured to provide driving recommendations during the operation of a train (1);
coupling the driver advisory module to an on-board control communication network (26) of the train, to which a train control unit (4), at least one component control unit (6, 8), and an external data interface (10) are coupled, wherein the control communication network (26) is a vehicle bus; and
establishing data communication over the control communication network, with the driver advisory module receiving input data over the control communication network and/or transmitting the driving recommendations over the control communication network.

14. Method according to claim 13, wherein the control communication network (26) is a pre-installed control communication network and wherein the driver advisory module (24) is retrofitted into the train (1).

15. Method according to claim 13 or 14, wherein the external data interface (10) is configured to receive input data for the driver advisory module (24) from an external data communication network (30) and to transmit the input data for the driver advisory module to the driver advisory module via the control communication network (26).

## Patentansprüche

1. Integriertes Zugsteuerungs- und Zugführerassistenzsystem (2), das Folgendes umfasst:
ein Onboard-Steuerungskommunikationsnetz (26) eines Zugs (1);
eine Zugsteuerungseinheit (4), die mit dem Steuerungskommunikationsnetz gekoppelt ist und eine Schnittstelle für den Zugführer zum Steuern eines Betriebs des Zugs umfasst,
wenigstens eine Komponentensteuerungseinheit (6, 8) wie etwa eine Bremsensteuerungseinheit zum Steuern eines Betriebs wenigstens einer Zugkomponente wie etwa einer Bremse, wobei die wenigstens eine Komponentensteuerungseinheit mit dem Steuerungskommunikationsnetz gekoppelt ist und die Zugsteuerungseinheit konfiguriert ist, Steuerungsdaten mit der wenigstens einen Komponentensteuerungseinheit über das Steuerungskommunikationsnetz auszutauschen,
ein Zugführerassistenzmodul (24), das mit dem Steuerungskommunikationsnetz gekoppelt ist und konfiguriert ist, während des Betriebs des Zugs Fahrempfehlungen bereitzustellen, und
eine Schnittstelle (10) für externe Daten, die mit dem Zugsteuerungskommunikationsnetz gekoppelt ist und einen Zugang zu einem externen Datenkommunikationsnetz (30) bildet, wobei das Zugführerassistenzmodul konfiguriert ist, Daten vom externen Datenkommunikationsnetz über die Schnittstelle für externe Daten zu empfangen,
wobei das Steuerungskommunikationsnetz (26) ein Fahrzeugbus ist.

2. Integriertes Zugsteuerungs- und Zugführerassistenzsystem (2) nach Anspruch 1, das ferner Folgendes umfasst:
einen Navigationssatellitensystem-Empfänger (18), der mit dem Steuerungskommunikationsnetz (26) gekoppelt ist und konfiguriert ist, Zugpositionsdaten für das Zugführerassistenzmodul (24) über das Steuerungskommunikationsnetz bereitzustellen.

3. Integriertes Zugsteuerungs- und Zugführerassistenzsystem (2) nach Anspruch 1 oder 2, wobei das Steuerungskommunikationsnetz (26) ein CAN-Bus oder ein LIN-Bus ist.

4. Integriertes Zugsteuerungs- und Zugführerassistenzsystem (2) nach einem der vorhergehenden Ansprüche, wobei die Schnittstelle (10) für externe Daten eine drahtlose Datenschnittstelle, insbesondere eine drahtlose Datenschnittstelle entsprechend einem Mobiltelefonstandard wie etwa GSM, UMTS und LTE ist.

5. Integriertes Zugsteuerungs- und Zugführerassistenzsystem (2) nach einem der vorhergehenden Ansprüche, wobei das Zugführerassistenzmodul (24) in eine bestimmte der wenigstens einen Komponentensteuereinheit (6, 8) integriert ist, wobei das Zugführerassistenzmodul konfiguriert ist, Daten vom externen Datenkommunikationsnetz (30) über die Schnittstelle (10) für externe Daten und das Steuerungskommunikationsnetz (26) zu empfangen.

6. Integriertes Zugsteuerungs- und Zugführerassistenzsystem (2) nach Anspruch 5, wobei das Zugführerassistenzmodul (24) in eine Bremsensteuerungseinheit (6) oder eine Motorsteuerungseinheit (8) integriert ist.

7. Integriertes Zugsteuerungs- und Zugführerassistenzsystem (2) nach einem der Ansprüche 1 bis 4, das ferner ein Energiemesssystem (32) umfasst, das mit dem Steuerungskommunikationsnetz (26) verbunden ist, wobei das Zugführerassistenzmodul (24) in das Energiemesssystem integriert ist, wobei das Zugführerassistenzmodul konfiguriert ist, Daten vom externen Datenkommunikationsnetz (30) über die Schnittstelle (10) für externe Daten und das Steuerungskommunikationsnetz zu empfangen.

8. Integriertes Zugsteuerungs- und Zugführerassistenzsystem (2) nach einem der Ansprüche 1 bis 4, wobei das Zugführerassistenzmodul (24) in die Schnittstelle (10) für externe Daten integriert ist.

9. Integriertes Zugsteuerungs- und Zugführerassistenzsystem (2) nach einem der Ansprüche 1 bis 4, wobei das Zugführerassistenzmodul (24) in einer eigenständigen Zugführerassistenzeinheit (22) enthalten ist, wobei das Zugführerassistenzmodul konfiguriert ist, Daten vom externen Datenkommunikationsnetz (30) über die Schnittstelle (10) für externe Daten und das Steuerungskommunikationsnetz (26) zu empfangen.

10. Integriertes Zugsteuerungs- und Zugführerassistenzsystem (2) nach einem der Ansprüche 5 bis 9, wobei das Zugführerassistenzmodul (24) konfiguriert ist, die Fahrempfehlungen über das Steuerungskommunikationsnetz (26) an eine Ausgabevorrichtung zu senden.

11. Integriertes Zugsteuerungs- und Zugführerassistenzsystem (2) nach einem der Ansprüche 1 bis 4, wobei das Zugführerassistenzmodul (24) in die Zugsteuerungseinheit (4) integriert ist, wobei das Zugführerassistenzmodul konfiguriert ist, Daten vom externen Datenkommunikationsnetz (30) über die Schnittstelle (10) für externe Daten und das Steuerungskommunikationsnetz (26) zu empfangen.

12. Integriertes Zugsteuerungs- und Zugführerassistenzsystem (2) nach einem der vorhergehenden Ansprüche, wobei das Zugführerassistenzmodul (24) ein Softwaremodul oder ein Hardwaremodul oder ein prozessorbasiertes Hardwaremodul mit wenigstens einem darauf installierten Softwareprogramm ist.

13. Verfahren zum Bilden eines integrierten Zugsteuerungs- und Zugführerassistenzsystems (2), wobei das Verfahren die folgenden Schritte umfasst:
Bereitstellen eines Zugführerassistenzmoduls (24), das konfiguriert ist, während des Betriebs eines Zugs (1) Fahrempfehlungen bereitzustellen;
Koppeln des Zugführerassistenzmoduls mit einem Onboard-Steuerungskommunikationsnetz (26) des Zugs, mit dem eine Zugsteuerungseinheit (4), wenigstens eine Komponentensteuerungseinheit (6, 8) und eine Schnittstelle (10) für externe Daten gekoppelt sind, wobei das Steuerungskommunikationsnetz (26) ein Fahrzeugbus ist; und
Einrichten einer Datenkommunikation über das Steuerungskommunikationsnetz, wobei das Zugführerassistenzmodul Eingangsdaten über das Steuerungskommunikationsnetz empfängt und/oder die Fahrempfehlungen über das Steuerungskommunikationsnetz sendet.

14. Verfahren nach Anspruch 13, wobei das Steuerungskommunikationsnetz (26) ein vorinstalliertes Steuerungskommunikationsnetz ist und wobei das Zugführerassistenzmodul (24) im Zug (1) nachgerüstet wird.

15. Verfahren nach Anspruch 13 oder 14, wobei die Schnittstelle (10) für externe Daten konfiguriert ist, Eingangsdaten für das Zugführerassistenzmodul (24) von einem externen Datenkommunikationsnetz (30) zu empfangen und die Eingangsdaten für das Zugführerassistenzmodul über das Steuerungskommunikationsnetz (26) an das Zugführerassistenzmodul zu senden.

## Revendications

1. Système (2) intégré de commande de train et de conseil au conducteur, comprenant :
un réseau (26) embarqué de communication de commande d'un train (1),
une unité (4) de commande de train, connectée au réseau de communication de commande et comprenant une interface pour le conducteur du train afin de commander un fonctionnement du train,
au moins une unité (6, 8) de commande de composant, telle qu'une unité de commande de frein, pour commander un fonctionnement d'au moins un composant du train, tel qu'un frein, la au moins une unité de commande d'un composant étant connectée au réseau de communication de commande et l'unité de commande de train étant configurée pour échanger des données de commande avec la au moins une unité de commande de composant par l'intermédiaire du réseau de communication de commande,
un module (24) de conseil au conducteur, connecté au réseau de communication de commande et configuré pour donner des recommandations de conduite pendant le fonctionnement du train, et
une interface (10) extérieure de données, connectée au réseau de communication de commande de train et formant une passerelle à un réseau (30) extérieur de communication de données, le module de conseil au conducteur étant configuré pour recevoir des données du réseau extérieur de communication de données par l'intermédiaire de l'interface extérieure de données,
dans lequel le réseau (26) de communication de commande est un bus de véhicule.

2. Système (2) intégré de commande de train et de conseil au conducteur suivant la revendication 1, comprenant en outre :
un récepteur (18) de système de satellite de navigation, connecté au réseau (26) de communication de commande et configuré pour fournir des données de position du train au module (24) de conseil au conducteur par l'intermédiaire du réseau de communication de commande.

3. Système (2) intégré de commande de train et de conseil au conducteur suivant la revendication 1 ou la revendication 2, dans lequel le réseau (26) de communication de commande est un bus CAN ou un bus LIN.

4. Système (2) intégré de commande de train et de conseil au conducteur suivant l'une quelconque des revendications précédentes, dans lequel l'interface (10) extérieur de données est une interface sans fil de donnée, en particulier une interface sans fil de donnée suivant une norme de téléphone mobile, telle que GSM, UMTS et LTE.

5. Système (2) intégré de commande de train et de conseil au conducteur suivant l'une quelconque des revendications précédentes, dans lequel le module (24) de conseil au conducteur est intégré dans une particulière de la au moins une unité (6, 8) de commande de composant, le module de conseil au conducteur étant configuré pour recevoir des données du réseau (30) extérieur de communication de données par l'intermédiaire de l'interface (10) extérieure de données et du réseau (26) de communication de commande.

6. Système (2) intégré de commande de train et de conseil au conducteur suivant la revendication 5, dans lequel le module (24) de conseil au conducteur est intégré dans une unité (26) de commande de frein ou dans une unité (8) de commande de moteur.

7. Système (2) intégré de commande de train et de conseil au conducteur suivant l'une quelconque des revendications 1 à 4, comprenant en outre un système (32) de mesure d'énergie connecté au réseau (26) de communication de commande, le module (24) de conseil au conducteur étant intégré dans le système de mesure d'énergie, le module de conseil au conducteur étant configuré pour recevoir des données du réseau (30) extérieur de communication de données par l'intermédiaire de l'interface (10) extérieure de données et du réseau de communication de commande.

8. Système (2) intégré de commande de train et de conseil au conducteur suivant l'une quelconque des revendications 1 à 4, dans lequel le module (24) de conseil au conducteur est intégré dans l'interface (10) extérieure de données.

9. Système (2) intégré de commande de train et de conseil au conducteur suivant l'une quelconque des revendications 1 à 4, dans lequel le module (24) de conseil au conducteur consiste en une unité (22) indépendante de conseil au conducteur, le module de conseil au conducteur étant configuré pour recevoir des données du réseau (30) extérieur de communication de données par l'intermédiaire de l'interface (10) extérieure de données et du réseau (26) de communication de commande.

10. Système (2) intégré de commande de train et de conseil au conducteur suivant l'une quelconque des revendications 5 à 9, dans lequel le module (24) de conseil au conducteur est configuré pour transmettre les recommandations de conduite à un dispositif extérieur par l'intermédiaire du réseau (26) de communication de commande.

11. Système (2) intégré de commande de train et de conseil au conducteur suivant l'une quelconque des revendications 1 à 4, dans lequel le module (24) de conseil au conducteur est intégré dans l'unité (4) de commande du train, le module de conseil au conducteur étant configuré pour recevoir des données du réseau (30) extérieur de communication de données par l'intermédiaire de l'interface (10) extérieure de données et du réseau (26) de communication de commande.

12. Système (2) intégré de commande de train et de conseil au conducteur suivant l'une quelconque des revendications précédentes, dans lequel le module (24) de conseil au conducteur est un module de logiciel ou un module de matériel ou un module de matériel reposant sur un processeur, sur lequel est installé au moins un programme de logiciel.

13. Procédé de création d'un système (2) intégré de commande de train et de conseil au conducteur, comprenant les stades dans lesquels :
on se procure un module (24) de conseil au conducteur configuré pour donner des recommandations de conduite pendant le fonctionnement d'un train (1) ;
on connecte le module de conseil au conducteur à un réseau (26) embarqué de communication de commande du train, auquel une unité (4) de commande de train, au moins une unité (6, 8) de commande d'un composant et une interface (10) extérieure de données sont connectées, le réseau (26) de communication de commande étant un bus de véhicule ; et
on établit une communication de données par le réseau de communication de commande avec le module de conseil au conducteur recevant des données d'entrée par le réseau de communication de commande et/ou transmettant les recommandations de conduite par le réseau de communication de commande.

14. Procédé suivant la revendication 13, dans lequel le réseau (26) de communication de commande est un réseau de communication de commande préinstallé et dans lequel le module (24) de conseil au conducteur est ajouté au train (1).

15. Procédé suivant la revendication 13 ou 14, dans lequel l'interface (10) extérieure de données est configurée pour recevoir des données d'entrée pour le module (24) de conseil au conducteur d'un réseau (30) extérieur de communication de données et pour transmettre les données d'entrée pour le module de conseil au conducteur au module de conseil au conducteur par l'intermédiaire du réseau (26) de communication de commande.
